# FASCICULE DE BREVET EUROPEEN

(11) **EP 2 762 208 B1**
(45) Date de publication et mention de la délivrance du brevet: **10.06.2015**
(21) Numéro de dépôt: 14151834.0
(22) Date de dépôt: 20.01.2014
(51) Int. Cl.: A63C 5/12

(54) **Procédé de fabrication d'une planche de glisse, et planche de glisse obtenue par ce procédé**
Herstellungsverfahren eines Snowboards, und mit diesem Verfahren erhaltenes Snowboard
Method for manufacturing a snowboard and snowboard obtained by said method

(30) Priorité: 05.02.2013 FR 1350964
(43) Date de publication de la demande: 06.08.2014
(73) Titulaire: Skis Rossignol, 38430 Saint-Jean de Moirans (FR)
(72) Inventeur: Christoud, M. Jacky, 38500 SAINT CASSIEN (FR); Cassibba, M. Emmanuel, 74330 SILLINGY (FR); Le Masson, M. Jacques, 74370 VILLAZ (FR); Monnet, Thierry, 38140 IZEAUX (FR)
(74) Mandataire: Cabinet Laurent & Charras

(56) Documents cités:
- FR-A1- 2 740 719
- FR-A1- 2 879 939
- US-A- 5 544 908

## Description

### Domaine technique

L'invention concerne le domaine technique des sports de glisse, et plus précisément des sports de glisse sur neige. Elle concerne plus particulièrement un procédé de fabrication de planches de glisse incluant des renforts composites, constitués de couches fibreuses imprégnées d'une matrice destinée à être polymérisée pour former une résine.

Elle vise plus spécifiquement un procédé dans lequel la matrice choisie pour imprégner les renforts est à base de composés acryliques, et plus précisément de composés dont la polymérisation intervient après imprégnation du renfort.

### Techniques antérieures

De façon générale, les planches de glisse comportent des renforts rigides qui sont disposés de part et d'autre d'un noyau central, et qui grâce à cet éloignement de la fibre neutre, confèrent une rigidité à la planche.

Ces renforts peuvent en particulier être constitués de structures composites qui combinent une ou plusieurs couches fibreuses noyées dans des résines rigides dans la gamme de température d'usage.

Les couches fibreuses sont de préférence à base de fils de haute ténacité, comme par exemple des fibres de verre, de carbone ou d'aramide voire de basalte, ou encore à base de fibres naturelles de hautes performances, parmi lesquelles on peut citer le lin à titre d'exemple.

Les résines employées sont généralement de type thermodurcissable, et fréquemment à base de composés polymériques de type époxy. Ces résines présentent certains avantages. En effet, les résines époxy se présentent sous la forme de compositions incluant de chaines polymériques d'une longueur relativement importante, qui sont au contact des filaments de fils des renforts. Lorsqu'elles sont exposées à des conditions de température appropriées, ces chaines polymériques réagissent entre elles dans des réactions de réticulation qui créent des pontages entre les différentes chaines polymériques, assurant ainsi la formation d'un réseau particulièrement rigide. Cette réaction de réticulation est irréversible, ce qui confère à la rigidité un caractère permanent. En pratique, cette réaction de réticulation a lieu dans un moule de fabrication de la planche, dans lequel l'ensemble des éléments de la structure de la planche ont été empilés.

Les couches fibreuses sont imprégnées avant leur mise en moule, pour pouvoir doser la proportion optimale de résine, et sa répartition sur toute la surface du renfort. En général, dans les procédés dit « par voie humide », la résine époxy est dans un état relativement pégueux avant la réaction de réticulation, ce qui rend les manipulations du renfort assez délicates, car sensibles à la présence de poussières, et plutôt salissantes. Il est également possible de réaliser une première étape de réticulation partielle de la résine après l'imprégnation de la couche fibreuse. Cette première étape réduit très fortement le caractère pégueux de la résine, ce qui facilite la manipulation du renfort lors de la mise en moule.

Toutefois, cette première réaction partielle doit être particulièrement maitrisée, pour conserver une capacité de déformation du renfort à l'intérieur du moule, pendant le formage final.

Parmi les contraintes liées à l'emploi de ce type de résine, on peut citer la nécessiter d'utiliser des températures relativement élevées pour provoquer la réticulation des chaines polymériques entre elles. Ces procédés sont donc fort consommateurs d'énergie, et obligent de choisir pour l'ensemble d'éléments constitutifs de la planche, des matériaux capables de supporter ces températures élevées.

Un autre problème lié aux opérations d'imprégnation est la génération de chutes lors de la découpe des renforts à la forme de la planche, et donc la perte de la fraction de résine présente sur les chutes.

Une autre contrainte est que les planches ainsi obtenues présentent une structure non recyclable, à cause du caractère irréversible des réactions de réticulation permettant d'obtenir la résine thermodurcissable.

On a envisagé dans le document US 5 544 908, d'employer des résines thermoplastiques, et en particulier à base de composés acryliques. La fabrication d'un tel ski est relativement complexe, car elle nécessite l'emploi de couches de renfort composites fabriquées dans une étape préalable, permettant de faire pénétrer la résine acrylique déjà polymérisée au coeur de la couche de renfort, dans des conditions mettant en oeuvre des solvants délicats à manipuler. Dans une étape ultérieure, il est nécessaire d'injecter le noyau, dans des conditions de pressions, et de manière générale avec un mode opératoire très spécifique.

### Exposé de l'invention

Un des objectifs de l'invention est de fournir un procédé qui permette de faciliter les opérations de fabrication d'une planche de glisse, en particulier en ce qui concerne la réalisation des renforts composites. Un autre objectif est d'améliorer le rendement énergétique du procédé de fabrication de planche intégrant ces renforts. Un objectif complémentaire est de réduire les pertes de matière utilisée. Un autre objectif est d'améliorer le recyclage des planches de glisse.

L'invention concerne donc un procédé de fabrication d'une planche de glisse, qui inclut au moins un renfort fibreux noyé dans une résine acrylique. Dans ce procédé, on dispose dans un moule l'ensemble des éléments constitutifs de la planche pour, après fermeture du moule, soumettre cet ensemble à des conditions de pression et/ou de température prédéterminées agissant sur tout ou partie de ces éléments pour aboutir à la forme de la planche quasi définitive.

Conformément à l'invention, ce procédé se caractérise en ce qu'avant et/ou pendant la soumission à ces conditions de pression et/ou de température, le renfort fibreux est imprégné d'une composition d'imprégnation comprenant au moins 70 % en poids de (méth)acrylate d'alkyle.

Autrement dit, la résine thermoplastique qui forme avec la couche fibreuse le renfort composite, est polymérisée pendant l'opération de moulage, c'est-à dire que la polymérisation est réalisée *in situ.* En d'autres termes, on dépose sur la couche fibreuse de renfort une composition qui comporte des monomères de (méth)acrylate qui se polymérisent au sein du renfort fibreux sous les conditions de pression et de température. Ainsi, le renfort fibreux est imprégné de la composition d'imprégnation majoritairement à base de monomères avant le début de la polymérisation du monomère initiée par les conditions de pression et/ou de température.

Ainsi, l'invention permet de réaliser des renforts noyés dans une résine thermoplastique avec une imprégnation à coeur, ce qui permet d'obtenir des propriétés mécaniques intéressantes en termes de renforcement de la planche. Il est à noter que le procédé de l'invention se différentie nettement des procédés d'imprégnation employant une résine thermoplastique déjà polymérisée, car une telle résine présente une viscosité très importante, qui l'empêche de pénétrer à coeur dans les renforts fibreux, ou qui nécessite des conditions de pression et de température élevées qui rendent le procédé délicat et très coûteux.

Ainsi, grâce à la viscosité très réduite de la composition comportant les monomères de (méth)acrylate d'alkyle, l'imprégnation peut se faire de manière très aisée et avec une assurance d'avoir une homogénéité d'imprégnation, compte tenu de la forte capacité de cette composition à se répandre au sein du renfort fibreux. En outre, la quantité de matrice employée est bien maitrisée et est optimisée pour obtenir le taux de résine souhaitée, sans perte de matière première.

Par composition de (méth)acrylate d'alkyle, on entend des compositions dans lequel le monomère peut-être unique, c'est-à-dire dans lequel le groupement alkyle est identique pour les monomères, mais également des compositions qui comportent différents monomères, comportant chacun des groupements alkyles distincts. La résine ainsi obtenue après polymérisation peut donc être un homopolymère ou un copolymère.

Avantageusement, pour obtenir des chaînes polymériques permettant un renforcement le plus efficace, on privilégiera les (méth)acrylates d'alkyle dans lequel le groupement alkyle comporte des chaînes carbonées comprenant entre 1 et 15 atomes de carbone, parmi lesquels on peut citer à titre d'exemple non limitatif les groupements méthyle, éthyle, s-propyle, i-propyle, s-butyle, i-butyle et t-butyle.

En pratique, la quantité minimale de monomère dans la composition d'imprégnation peut être choisie pour assurer un compromis entre la volatilité de la composition, c'est-à-dire sa capacité à demeurer dans le renfort fibreux sans s'évaporer, et d'autre part, la viscosité de la composition permettant d'assurer sa partition optimale.

Ainsi, en fonction de différents facteurs parmi lesquels comptent les conditions opératoires et les compléments hors monomériques de la solution, on pourra préférer que le taux en poids de monomère de (méth)acrylate d'alkyle globale soit supérieur à 70 %, avantageusement à 80 % très avantageusement à 90 %, voire à 95 %.

Le complément à la fraction monomérique de la composition peut inclure différentes constituants, et en particulier des chaînes polymériques permettant d'augmenter la viscosité globale.

A titre préférentiel, ces chaînes polymériques peuvent être formées de monomères analogues à ceux de la fraction majoritaire de la composition. Autrement dit, ces chaînes polymériques peuvent comporter un nombre réduit de monomères de (méth)acrylate d'alkyle, pour former des homo-oligomères, ou des co-oligomères de (méth)acrylate d'alkyle, selon qu'elles sont constituées de monomères dont les groupes alkyles sont identiques ou différents.

Bien entendu, la composition d'imprégnation peut également inclure d'autres composants nécessaires au bon déroulement de la réaction de polymérisation, et en particulier des initiateurs radicalaires, principalement choisi parmi les familles des peroxydes et des azonitriles, tel qu'à titre d'exemple l'azobisisobutyronitrile (AIBN) ou le peroxyde de benzoyle (PBO).

En pratique, la composition d'imprégnation peut avantageusement présenter une viscosité, mesurée à 25°C, qui est comprise entre 10 et 5 000 centipoises (cP), et avantageusement comprise entre 100 et 1000 cP, et préférentiellement voisine de 500 cP, à +/- 10%.

En effet, lorsque la viscosité est trop faible, une fluidité trop importante rend les manipulations délicates, avec des risques de fuite de la composition hors du moule. Par ailleurs, des phénomènes d'évaporation peuvent intervenir, du fait de la volatilité des monomères, avec également des taux de retrait plus important de la matière après polymérisation. Au-delà d'une viscosité limite plus élevée, on considère que le déplacement de la composition peut être freiné, et qu'elle augmente les risques de répartition imparfaite de l'imprégnation.

La réalisation du renfort conformément à l'invention peut également se combiner avec des possibilités spécifiques de réalisation de la couche supérieure de protection et de décoration de la planche.

Ainsi, dans une première forme de réalisation, la couche de renfort fibreux imprégnée de la composition d'imprégnation peut recevoir sur sa face supérieure une feuille d'un matériau thermoplastique préexistante, à base d'un matériau chimiquement compatible avec le (méth)acrylate d'alkyle, pour permettre une adhésion efficace de cette feuille qui sera destinée à devenir la couche supérieure de protection de la planche.

Bien évidemment, cette feuille de matériau thermoplastique peut être à base de résine acrylique, analogue à celle dans lequel le renfort fibreux est noyé.

Dans une autre forme d'exécution, il est possible qu'avant fermeture du moule, on dépose au-dessus du renfort fibreux, une quantité de composition d'imprégnation en excès. Cette quantité en excès vient au contact de la face intérieure du couvercle du moule au moment de la fermeture de celui-ci, de sorte qu'après moulage, cette quantité en excès forme la couche supérieure de protection de la planche.

Autrement dit, la composition qui imprègne le renfort peut se trouver en quantité suffisante pour polymériser non seulement à l'intérieur du renfort qu'elle imprègne, mais également au-dessus pour former ainsi une couche de résine thermoplastique intimement liée à celle du renfort.

Dans une variante de réalisation, il est également possible de mettre en place un film décoré, présent au-dessus du renfort, avant de déposer la quantité de composition d'imprégnation en excès, de manière à intégrer le décor de la planche sous la couche qui va polymériser.

Ce film peut être de nature très variable. Il peut notamment s'agir de non-tissé de verre ou de polyester, voire préférentiellement d'acrylique. Il peut notamment être imprimé avec des encres formant des motifs décoratifs. Le film peut adopter diverse géométries. Il peut notamment être plein ou ajouré pour permettre la communication de la composition d'imprégnation entre les zones situées en dessus et en dessous du film, de manière à augmenter l'ancrage de la couche supérieure de protection. Ce film peut être présent sur l'intégralité de la surface de la planche, ou bien encore, n'être présent dans une ou plusieurs zones localisées.

Différentes variantes d'exécution du procédé peuvent être envisagées.

Dans une première forme de réalisation, le renfort fibreux peut être imprégné après avoir été mis à l'intérieur du moule, et avant la fermeture de celui-ci.
Autrement dit, lorsque le renfort est mis en place à l'intérieur du moule, on vient déposer sur celui-ci la quantité de composition d'imprégnation souhaitée pour obtenir le renfort composite avec les proportions en fibres et en résine souhaitées.

Il est à noter que ces opérations peuvent intervenir plusieurs fois lorsque la planche inclut plusieurs renforts. Ainsi, si la planche inclut un renfort fibreux au-dessus de la semelle et en-dessous du noyau, une première imprégnation peut avoir lieu avant la mise en place du noyau. L'imprégnation du renfort supérieur, situé au-dessus du noyau intervient alors dans une étape ultérieure. Il est également possible de mixer les imprégnations préalables à la mise en moule et celles intervenant directement dans le moule.

Dans une autre forme de réalisation, l'imprégnation peut intervenir alors que le moule est déjà fermé, par des techniques d'injection ou d'infusion. Pour ce faire, le moule comporte des orifices communiquant avec le volume intérieur dans lequel sont emprisonnés les éléments constitutifs de la planche.

La composition d'imprégnation peut être ensuite injectée sous pression, ou bien encore aspirée par d'autres orifices d'aspiration communiquant également avec le volume à l'intérieur du moule.

### Description sommaire des figures

La manière de réaliser l'invention, ainsi que les avantages qui en découlent ressortiront bien de la description des modes de réalisation qui suivent, à l'appui des figures annexées dans lesquelles :
- la figure 1 est une vue en coupe simplifiée montrant un moule de fabrication d'une planche de glisse dans lequel ont été partiellement empilés les différents éléments constitutifs de la planche, et sont montrés avant fermeture du moule ;
- la figure 2 est une vue analogue à la figure 1, pour une variante du procédé de fabrication.

Bien entendu, ces schémas sont donnés à titre illustratif, et ont pour but essentiel de permettre la compréhension de l'invention, sans obligatoirement être une représentation fidèle à la réalité, notamment en ce qui concerne les dimensions des différents éléments représentés.

### Manières de réaliser l'invention

Comme déjà évoqué, l'invention concerne un procédé de fabrication de planches de glisse, et peut s'appliquer indifféremment à des skis, qu'il s'agisse de skis alpins, de skis de randonnée ou de skis de fond, mais aussi des planches de surf, sans aucune limitation.

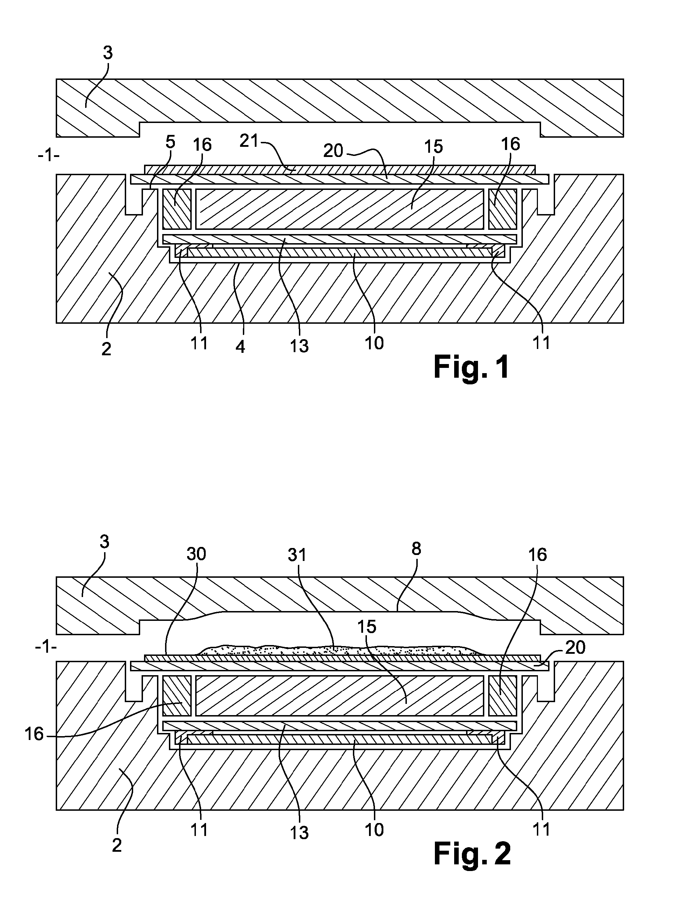

De façon classique, et comme illustré à la figure 1, les planches de glisse sont formées par moulage, dans un moule **1** comportant un fond **2** et un couvercle **3.** Le fond **2** comporte un logement **4** à l'intérieur duquel est déposé l'ensemble des éléments constitutifs de la planche. L'invention n'est pas limitée à un type de structure de planches, et en particulier couvre indifféremment les structures de type sandwich ou les structures de type coque. Dans la forme illustrée de la figure 1, correspondant à une structure sandwich, le fond du moule **2** accueille une semelle **10** bordée de carres **11** et sur lequel est déposé un premier renfort **13.**

Ce renfort **13** peut être un renfort fibreux, auquel cas s'applique le procédé d'imprégnation de l'invention, ou bien encore d'autres renforts différents de type métallique ou analogue. Le renfort fibreux peut être réalisé de différentes manières, à partir de divers matériaux, parmi lesquels on citera à titre d'exemple les fibres de verre, les fibres de carbone, les fibres d'aramide ou de basalte, ainsi que des fibres naturelles telles que le lin ou analogue.

Le nombre de renforts utilisé n'est pas non plus limité, et il est possible de superposer plusieurs couches distinctes de natures et/ou géométries identiques ou différentes.

Dans l'hypothèse où le renfort inférieur **13** est de type fibreux, il peut recevoir une quantité de composition d'imprégnation, qui est déposée sur la face supérieure du renfort, de façon continue ou en zones localisées, en quantité suffisante pour permettre l'imprégnation souhaitée. Le renfort inférieur **13** reçoit ensuite un élément longiligne **15** formant le noyau, bordé latéralement de chants **16.** L'ensemble est ensuite revêtu d'une couche fibreuse **20** formant le futur renfort supérieur. Dans la forme illustrée, ce renfort **20** déborde latéralement sur des épaulements **5** du fond du moule **2** pour laisser à ce renfort supérieur **20** la capacité de se déformer lors du moulage. A ce stade, tout comme pour le renfort inférieur **13,** le renfort supérieur **20** reçoit une quantité de composition d'imprégnation. Bien entendu, d'autres renforts en particulier métalliques peuvent être ajoutés en combinaison avec le renfort fibreux inférieur **13** et/ou le renfort supérieur **20.**

Après imprégnation, le renfort supérieur **20** reçoit une couche supérieure de protection et de décoration **21.** Le moule est alors fermé par mise au contact du couvercle et du fond du moule, ce qui applique une pression sur l'ensemble des constituants enfermés dans le moule. L'ensemble est ensuite porté à une température et à une pression permettant la polymérisation de la composition d'imprégnation, selon un cycle optimisé en ce qui concerne le temps de montée en température, la durée du maintien à température constante, et la phase de réduction de la température.

Pendant le moulage, la couche supérieure de protection **21** et le renfort supérieur **20** adoptent la forme imposée par les géométries complémentaires du couvercle du moule **3** et du noyau **15,** avec des éventuels effets tridimensionnels. Du fait que la composition d'imprégnation comporte une fraction très majoritaire de monomères, elle se déforme aisément, même à des températures relativement basses.

Dans un deuxième exemple de réalisation, illustré à la figure 2, on met en place dans le fond de moule **2,** de façon analogue à l'exemple de la figure 1, les différents éléments que sont la semelle **10,** les carres **11,** le renfort inférieur **13,** le noyau **15** et les chants **16** ainsi que le renfort supérieur **20,** qui est également imprégné.

Par la suite, on dépose sur le renfort **20** imprégné un film supportant les motifs de décoration, qui peuvent par exemple avoir été imprimés. Comme déjà évoqué, ce film peut être présent sur la totalité de la longueur de la planche, ou n'être présent que par zone de moindre surface. Par la suite, on dépose par-dessus le film **30** une quantité de composition d'imprégnation qui forme avant fermeture du moule une sorte de dôme **31** dont la forme dépend de la viscosité de la composition d'imprégnation. La quantité de matière de cette couche **31** est suffisante pour combler l'espace présent sous le dessous du couvercle **3,** de sorte que l'intégralité de la face inférieure **8** du couvercle du moule vient au contact du dôme **31** lorsque le moule est fermé. Ainsi, lors de l'application du cycle de température permettant la polymérisation de la composition d'imprégnation, la quantité **31** en excès disposée au-dessus du film **30** se déforme et se rigidifie pour former la couche supérieure de protection de la planche.

Dans une autre variante non représentée, la fabrication de la planche peut se faire de telle sorte que l'ensemble des éléments constitutifs de la planche, y compris les renforts de la couche supérieure de protection sont mis en place dans le moule qui est ensuite fermé. Ce moule est équipé d'ouvertures traversantes, permettant l'introduction sous pression, ou par phénomène d'inspiration, d'une quantité de composition d'imprégnation, qui se déplace en fonction du champ de pression appliqué pour imprégner l'intégralité des renforts fibreux. Ce fluage de la composition d'imprégnation est favorisé par la faible viscosité de cette composition.

A titre d'exemple, différentes compositions d'imprégnation peuvent être employées.

Un premier exemple de composition d'imprégnation peut être obtenu comme suit. On dissout dans une composition de méthacrylate de méthyle (MMA) liquide une quantité de polymétacrylate de méthyle (PMMA) solide, de telle sorte que le MMA représente 75% en poids, le PMMA représentant 25% en poids. Cette dissolution est obtenue par un mélange pendant une durée de 48 heures à une température ambiante de l'ordre de 25°C. La viscosité de la composition d'imprégnation acrylique ainsi obtenue est de l'ordre de 500 cP (+/-50cP), mesurée à la même température ambiante de 25°C. Un initiateur radicalaire est ajouté après dissolution complète, dans la proportion de 500 ppm (+/- 10%). Différents initiateurs radicalaires peuvent être utilisés, en particulier l'azobisisobutyronitrile (AIBN), ou encore du peroxyde de benzoyle (PBO).

Un deuxième exemple de composition d'imprégnation peut être obtenu selon un mode opératoire analogue, à la différence près des proportions de monomère MMA et de polymère PMMA. Dans ce deuxième exemple, la fraction monomérique représente 85% en poids. La viscosité mesurée dans les mêmes conditions de cette composition est voisine de 250 cP (+/-50cP).

Concernant les proportions d'imprégnation, celles-ci dépendent de la nature des fibres utilisées, et des propriétés mécaniques souhaitées. A titre d'exemple, le rapport poids de résine sur poids de fibre peut être voisin de 80/20 (+/-10%), ce qui équivaut sensiblement pour des fibres de verre à un rapport 30/70 en volume.

Concernant le cycle de température à appliquer, le palier de température stabilisé est situé entre 50 et 115°C, et de préférence compris entre 80 et 105°C, très préférentiellement entre 80°C et 90°C. La durée de ce palier de température stabilisée est comprise entre 5 et 20 minutes, et de préférence voisine de 10 minutes.

Bien entendu, de multiples variantes peuvent être envisagées, dès lors que le principe de l'invention est respecté, à savoir la réalisation de l'opération de polymérisation du monomère méthacrylique pendant l'opération de moulage.

Il ressort de ce qui précède que le procédé conforme à l'invention présente de multiples avantages, parmi lesquels on peut citer :
- les planches obtenues présentent des propriétés mécaniques sensiblement analogues à celles réalisées avec des renforts imprégnés de résine thermodurcissable ;
- la température de moulage, nécessaire pour réaliser cette polymérisation est sensiblement inférieure à la température qu'il est nécessaire d'appliquer pour réaliser la réaction de réticulation des résines polymériques thermodurcissables, typiquement entre 105°C et 115°C pour les résines époxy. Il s'ensuit un gain énergétique global pour le procédé de fabrication ;
- la température de moulage, inférieure à celle observée dans les procédés équivalents utilisant des résines thermodurcissables, a également pour intérêt de limiter les contraintes thermiques imposées sur les autres éléments constitutifs de la planche. En particulier, les couches de décors et de protection peuvent être choisies en un matériau plus économique, car ne nécessitant pas de tenue en températures élevée. Le fait que ces couches de décor ne subissent pas des températures trop élevées leur permet de conserver leur brillance ;
- l'utilisation d'une composition principalement monomérique, et donc de viscosité très réduite permet une imprégnation des renforts fibreux directement dans le moule, sans avoir besoin de réaliser une imprégnation préalable. De ce fait, les chutes générées lors de la découpe des renforts à la forme de la planche se font sur des textiles non imprégnés. Aucune matière d'imprégnation n'est donc éliminée en même temps que ces chutes textiles ;
- la résine acrylique obtenue en employant la composition d'imprégnation de l'invention présente un haut degré de transparence, ce qui permet d'obtenir des effets esthétiques intéressants : ainsi, les couches de décors sont clairement apparentes avec un haut niveau de détail, et les couches de renfort fibreux, en particulier celles à base de verre, sont transparentes sur toute leur épaisseur ;
- du fait de son caractère thermoplastique, et combiné au fait que la réaction de polymérisation intervient pendant le moulage, il est ainsi possible de réaliser des formes tridimensionnelles relativement complexes, en comparaison avec les solutions antérieures dans lesquelles la déformation intervient alors que la résine est déjà polymérisée à l'intérieur du renfort qu'elle imprègne ;
- les planches de glisse obtenues par le procédé conforme à l'invention sont plus facilement recyclables, du fait du caractère thermoplastique de la résine imprégnant les renforts. Les matériaux des éléments constitutifs de la planche sont ainsi séparables par application d'une température raisonnable, proche de 150°C, et peuvent être récupérés de façon individuelle On notera également que la réaction de polymérisation est elle-même réversible, puisqu'une exposition de la résine acrylique à une température de l'ordre de 400°C permet de décomposer la chaîne polymérique en monomères d'origine.. Ainsi, la matrice d'imprégnation obtenue est ensuite réutilisable.

## Revendications

1. Procédé de fabrication d'une planche de glisse, ladite planche incluant au moins un renfort fibreux (20) noyé dans une résine acrylique, pendant lequel on dispose dans un moule l'ensemble des éléments constitutifs de la planche pour, après fermeture du moule, soumettre cet ensemble à des conditions de pression et/ou de température prédéterminées, **caractérisé en ce qu'**avant et/ou pendant la soumission auxdites conditions de pression et/ou de température, le renfort fibreux (20) est imprégné d'une composition d'imprégnation comprenant au moins 70% en poids de (méth)acrylate d'alkyle.

2. Procédé selon la revendication 1, **caractérisé en ce que** le groupement alkyle des monomères de (méth)acrylate d'alkyle contient entre 1 et 15 atomes de carbone.

3. Procédé selon la revendication 1, **caractérisé en ce que** le groupement alkyle des monomères de (méth)acrylate d'alkyle est choisi dans le groupe comprenant les groupements : méthyle, éthyle ; s-propyle, i-propyle, t-butyle ; s-butyle, i-butyle.

4. Procédé selon la revendication 1, **caractérisé en ce que** la composition comprend au moins 70% en poids de méthacrylate de méthyle (MMA).

5. Procédé selon la revendication 1, **caractérisé en ce que** la composition inclut des homo-oligomères et/ou des co-oligomères de (méth)acrylate d'alkyle.

6. Procédé selon la revendication 1, **caractérisé en ce que** la composition d'imprégnation présente une viscosité à 25°C comprise entre 10 cP et 5000 cP, préférentiellement entre 100 cP et 1000 cP, très préférentiellement voisine de 500 cP.

7. Procédé selon la revendication 1, **caractérisé en ce qu'**avant fermeture du moule, le renfort fibreux (20) reçoit une feuille (21) de matériau thermoplastique sur sa face supérieure.

8. Procédé selon la revendication 7, **caractérisé en ce que** la feuille de matériau thermoplastique est à base d'une résine acrylique.

9. Procédé selon la revendication 1, **caractérisé en ce qu**'avant fermeture du moule, on dépose au-dessus du renfort fibreux(20), une quantité (31) de composition d'imprégnation en excès, ladite quantité (31) venant au contact de la face intérieure du couvercle (3) du moule au moment de la fermeture du moule, de sorte qu'après moulage ladite quantité en excès forme la couche extérieure de protection de la planche.

10. Procédé selon la revendication 9, **caractérisé en ce qu'**on met en place un film décoré au-dessus du renfort avant le dépôt de la quantité de composition d'imprégnation en excès.

11. Procédé selon la revendication 1, **caractérisé en ce que** le renfort fibreux est imprégné avant la mise en moule.

12. Procédé selon la revendication 1, **caractérisé en ce que** le ou les renforts fibreux sont imprégnés après la mise en moule, et avant fermeture du moule.

13. Procédé selon la revendication 1, **caractérisé en ce que** la composition d'imprégnation est introduite après fermeture du moule, par un ou plusieurs orifices communiquant avec le volume intérieur dudit moule.

14. Procédé selon la revendication 7, **caractérisé en ce que** la composition d'imprégnation est aspirée par un ou plusieurs orifices d'aspiration communiquant avec le volume intérieur du moule.

15. Planche de glisse obtenue par le procédé selon l'une des revendications précédentes.

## Patentansprüche

1. Verfahren zur Herstellung eines Gleitbretts, wobei das Brett mindestens eine in Acrylharz eingebettete Faserverstärkung (20) umfasst, wobei während des Verfahrens die Einheit aus den Bestandteilen der Bretts in einer Form angeordnet werden, um nach einem Schließen der Form, die Einheit vorbestimmten Druck- und/oder Temperaturbedingungen auszusetzen, **dadurch gekennzeichnet, dass** vor und/oder während der Anwendung der Druck- und/oder Temperaturbedingungen die Faserverstärkung (20) mit einer Imprägnierungszusammensetzung imprägniert wird, die mindestens 70 Gew.-% Alkyl(meth)acrylat umfasst.

2. Verfahren nach Anspruch 1, **dadurch gekennzeichnet, dass** die Alkylgruppe der Alkyl(meth)acrylatmonomere zwischen 1 und 15 Kohlenstoffatomen enthält.

3. Verfahren nach Anspruch 1, **dadurch gekennzeichnet, dass** die Alkylgruppe der Alkyl(meth)acrylatmonomere aus der Gruppe ausgewählt ist, die die Gruppen umfasst: Methyl, Ethyl, s-Propyl, i-Propyl, t-Butyl, s-Butyl, i-Butyl.

4. Verfahren nach Anspruch 1, **dadurch gekennzeichnet, dass** die Zusammensetzung mindestens 70 Gew.-% Methylmethacrylat (MMA) umfasst.

5. Verfahren nach Anspruch 1, **dadurch gekennzeichnet, dass** die Zusammensetzung Homo-Oligomere und/oder Co-Oligomere von Alkyl(meth)acrylat umfasst.

6. Verfahren nach Anspruch 1, **dadurch gekennzeichnet, dass** die Imprägnierungszusammensetzung eine Viskosität bei 25°C aufweist, die zwischen 10 cP und 5000 cP, bevorzugt zwischen 100 cP und 1000 cP, sehr bevorzugt um die 500 cP beträgt.

7. Verfahren nach Anspruch 1, **dadurch gekennzeichnet, dass** vor dem Schließen der Form die Faserverstärkung (20) eine Folie (21) aus thermoplastischem Material auf ihrer Oberseite erhält.

8. Verfahren nach Anspruch 7, **dadurch gekennzeichnet, dass** die Folie aus thermoplastischem Material auf Basis eines Acrylharzes ist.

9. Verfahren nach Anspruch 1, **dadurch gekennzeichnet, dass** vor dem Schließen der Form über der Faserverstärkung (20) eine überschüssige Menge (31) Imprägnierungszusammensetzung aufgebracht wird, wobei die Menge (31) im Moment des Schließens der Form mit der Innenseite des Deckels (3) der Form in Kontakt kommt, so dass nach der Formung die überschüssige Menge die äußere Schutzschicht des Bretts bildet.

10. Verfahren nach Anspruch 9, **dadurch gekennzeichnet, dass** vor dem Aufbringen der überschüssigen Menge Imprägnierungszusammensetzung ein Dekorfilm über die Verstärkung gelegt wird.

11. Verfahren nach Anspruch 1, **dadurch gekennzeichnet, dass** die Faserverstärkung vor dem Einbringen in die Form imprägniert wird.

12. Verfahren nach Anspruch 1, **dadurch gekennzeichnet, dass** die Faserverstärkung/en nach dem Einsetzen in die Form und vor dem Schließen der Form imprägniert wird bzw. werden.

13. Verfahren nach Anspruch 1, **dadurch gekennzeichnet, dass** die Imprägnierungszusammensetzung nach dem Schließen der Form durch eine oder mehrere Öffnung/en eingebracht wird, die mit dem Innenvolumen der Form in Verbindung steht bzw. stehen.

14. Verfahren nach Anspruch 7, **dadurch gekennzeichnet, dass** die Imprägnierungszusammensetzung durch eine oder mehrere Ansaugöffnung/en angesaugt wird, die mit dem Innenvolumen der Form in Verbindung steht bzw. stehen.

15. Gleitbrett, das durch das Verfahren nach einem der vorhergehenden Ansprüche erhalten ist.

## Claims

1. Process for the manufacturing of a board for gliding on snow, with the said board including at least one fibrous reinforcement (20) embedded in an acrylic resin, during which one places all the component parts of the board in a mold in order, after closure of the mold, to expose this assembly to pre-determined pressure and/or temperature conditions, **characterized by** the fact that, before and/or during the subjection to the said pressure and/or temperature conditions, the fibrous reinforcement (20) is impregnated with an impregnation composition including at least 70%, in weight, of alkyl (meth)acrylate.

2. Process according to claim 1, **characterized by** the fact that the alkyl grouping of alkyl (meth)acrylate monomers contains between 1 and 15 carbon atoms.

3. Process according to claim 1, **characterized by** the fact that the alkyl grouping of the alkyl (meth)acrylate monomers is chosen from the group including the groupings: methyl, ethyl; s-propyl, i-propyl, t-butyl; s-butyl, i-butyl.

4. Process according to claim 1, **characterized by** the fact that the composition includes at least 70%, in weight, of methyl methacrylate (MMA).

5. Process according to claim 1, **characterized by** the fact that the composition includes alkyl (meth)acrylate homo-oligomers and/or co-oligomers.

6. Process according to claim 1, **characterized by** the fact that the impregnation composition has a viscosity, at 25°C, between 10 cP and 5000 cP, preferably between 100 cP and 1000 cP, and very preferably around 500 cP.

7. Process according to claim 1, **characterized by** the fact that, before closure of the mold, the fibrous reinforcement (20) receives a sheet of thermoplastic material (21) on its upper face.

8. Process according to claim 7, **characterized by** the fact that the sheet of thermoplastic material is based on an acrylic resin.

9. Process according to claim 1, **characterized by** the fact that, before closure of the mold, one deposits an excess quantity of impregnation composition (31) above the fibrous reinforcement (20), with the said quantity (31) coming into contact with the interior face of the mold cover (3) at the time of closure of the mold such that, after molding, the said excess quantity forms the board's outer protective layer.

10. Process according to claim 9, **characterized by** the fact that one places a decorative film on top of the reinforcement before the deposition of the excess quantity of impregnation composition.

11. Process according to claim 1, **characterized by** the fact that the fibrous reinforcement is impregnated before being placed in the mold.

12. Process according to claim 1, **characterized by** the fact that the fibrous reinforcement or reinforcements is/are impregnated after placement in the mold and before closure of the mold.

13. Process according to claim 1, **characterized by** the fact that the impregnation composition is inserted after mold closure, through one or more openings penetrating through to the interior volume of the said mold.

14. Process according to claim 7, **characterized by** the fact that the impregnation composition is sucked through one or more openings penetrating through to the interior volume of the mold.

15. Board for gliding on snow obtained through the process according to one of the preceding claims.
